# FASCICULE DE BREVET EUROPEEN

(11) **EP 0 749 868 B1**
(45) Date de publication et mention de la délivrance du brevet: **13.10.1999**
(21) Numéro de dépôt: 96420208.9
(22) Date de dépôt: 21.06.1996
(51) Int. Cl.: B60N 2/44

(54) **Dispositif de liaison articulée entre le dossier et l'assise d'un siège de véhicule**
Gelenkverbindung zwischen der Rückenlehne und dem Sitzteil eines Fahrzeugsitzes
Hinged connection between the backrest and the seat part of a vehicle seat

(30) Priorité: 21.06.1995 FR 9507746
(43) Date de publication de la demande: 27.12.1996
(73) Titulaire: Grupo Antolin-Ingenieria S.A., 09080 Burgos (ES)
(72) Inventeur: Chabanne, Jean-Pierre, 89710 Champvallon (FR)
(74) Mandataire: Perrier, Jean-Pierre

(56) Documents cités:
- EP-A- 0 359 406
- EP-A- 0 372 337
- US-A- 5 005 908
- US-A- 5 269 589

## Description

L'invention est relative à un dispositif de liaison articulée entre le dossier et l'assise d'un siège de véhicule.

Elle concerne plus particulièrement les sièges dans lesquels l'armature de dossier est montée à articulation par rapport à l'armature d'assise autour d'un premier axe horizontal transversal, de manière à pouvoir occuper diverses positions de confort, et est également articulée autour d'un deuxième axe, parallèle au premier, pour permettre au dossier d'être rabattu sur l'assise dans le but de réduire l'encombrement du siège.

Dans ce type connu de siège, la deuxième articulation est normalement calée par des moyens de verrouillage, dont l'actionnement n'est effectué qu'au moment du repliement du dossier. Ce type de siège est fréquemment utilisé dans les moyens de transport collectif, tels qu'avions, trains, autocars et dans certaines automobiles de type monocoque. Dans ces diverses applications, le siège est bien souvent amovible pour permettre la modification de sa répartition sur le plancher du véhicule, en fonction de la qualité de confort exigée ou pour transformer le véhicule en transport de marchandises.

Pour augmenter la sécurité des voyageurs, il est envisagé depuis quelques années, de doter chaque siège d'une ceinture de sécurité. La branche thoracique de la sangle de la ceinture, provenant d'un enrouleur fixé à l'arrière du siège sur la structure d'assise, traverse un passant fixé au sommet de l'un des montants de l'armature de dossier, puis descend jusqu'au niveau de l'armature d'assise où elle reçoit la boucle d'un pêne se fixant dans un boîtier fixé à l'un des côtés de cette armature. A partir du pêne, la sangle abdominale s'étend transversalement au-dessus du siège, jusqu'à un organe d'ancrage disposé de l'autre côté de l'armature d'assise.

En cas d'accident, ou de décélération brutale, l'énergie cinétique communiquée au passager assis sur le siège se transmet à la ceinture de sécurité et, par celle-ci, aux armatures respectivement de dossier, et d'assise. Il en résulte que celles-ci doivent être résistantes, aussi bien dans les zones les plus sollicitées que dans les zones transmettant les efforts entre les différentes parties, et par exemple, dans la zone d'articulation de verrouillage du dossier par rapport à l'assise.

L'accroissement de la résistance des deux armatures peut résulter d'un accroissement de l'épaisseur de leurs composants, mais cette solution présente l'inconvénient d'augmenter le poids du siège.

Pour remédier à cet inconvénient, il est donc préférable de choisir les matériaux des divers composants, en fonction des efforts locaux et en privilégiant la recherche d'un allégement, par exemple en utilisant des alliages d'aluminium chaque fois qu'ils peuvent se substituer à des alliages ferreux, ayant une masse spécifique plus élevée.

Cela conduit donc à mettre en oeuvre des matériaux différents dont la liaison entre eux est d'autant moins aisée qu'elle doit résister à des efforts instantanés importants.

La présente invention a pour but de fournir un dispositif de liaison entre des éléments en matériaux différents faisant partie d'une double articulation entre armature de siège et armature de dossier, dans un siège intégrant une ceinture de sécurité, dispositif procurant une bonne transmission des efforts, tout en n'affectant ni la rigidité des armatures, ni le fonctionnement de cette articulation.

A cet effet, dans le dispositif de liaison selon l'invention, la première articulation par rapport à l'armature d'assise est assurée, pour chaque montant, par un levier comportant au-dessus de sa partie tourillonnant sur le premier axe d'articulation porté par l'armature d'assise, un tenon de section rectangulaire s'emmanchant dans un logement central ménagé dans le profilé constituant le montant correspondant, tandis que dans la deuxième articulation, l'axe est porté par le tenon précité et coopère avec au moins une platine qui, disposée contre le levier, s'encastre avec serrage dans un logement du profilé, auquel elle est fixée par rivetage, cette platine présentant une extrémité inférieure dépassant du montant et munie localement d'une denture, apte à coopérer avec une denture complémentaire portée par un mécanisme de calage du montant par rapport au levier.

Dans cette structure, la liaison entre le levier, assurant l'articulation de confort, et le montant correspondant est assurée par l'intermédiaire de la platine qui est interposée entre ce levier et la face interne du montant et qui, en conséquence, est disposée le plus près possible de la partie du montant tubulaire ayant la plus grande résistance. Cette platine est dotée de dentures qui, en coopérant avec les dentures complémentaires du mécanisme de calage, forment un ensemble pouvant résister à des efforts instantanés élevés.

Lorsque le montant est constitué par un profilé extrudé en alliage d'aluminium, l'articulation de ce montant par rapport au levier, réalisé en alliage ferreux, est assurée par deux platines en alliage ferreux disposées de part et d'autre de ce levier et s'encastrant dans des rainures longitudinales ménagées à l'intérieur du profilé, latéralement par rapport au logement pour le tenon du levier.

Dans ces conditions, la transmission des efforts entre le levier et le montant s'effectue par deux platines disposées à l'intérieur du montant dans des rainures de sa paroi, c'est-à-dire au plus près des parties du montant résistant mieux aux efforts.

Avantageusement, chacune des platines comporte à proximité de ses extrémités des semi découpes formant des bossages qui, en saillie à l'opposé du levier et présentant des bords longitudinaux parallèles, se logent dans des rainures longitudinales ménagées dans le profilé et à proximité de sa fibre neutre.

Les semi découpes de chaque platine ont essentiellement pour fonction d'augmenter la surface de contact entre chaque platine et les parois internes du montant correspondant et d'améliorer ainsi la transmission des efforts instantanés du montant au levier.

D'autres caractéristiques et avantages ressortiront de la description qui suit en référence au dessin schématique annexé, représentant à titre d'exemple non limitatif, une forme d'exécution de ce dispositif de liaison articulée dans le cas de son application à un siège amovible avec ceinture de sécurité, avec double articulation du dossier par rapport à l'assise.
Figure 1 est une vue de face en élévation représentant, de façon simplifiée, le siège selon l'invention,
Figure 2 est une vue de côté en élévation des armatures de dossier et d'assise,
Figure 3 est une vue partielle en perspective éclatée montrant les différents composants du dispositif d'articulation selon l'invention,
Figure 4 est une vue de face en bout d'une forme d'exécution du profilé constituant au moins l'un des montants,
Figure 5 est une vue de côté en coupe partielle suivant V-V de figure 4, montrant l'articulation du montant profilé,
Figure 6 est une vue en coupe similaire à la figure 5, mais montrant l'articulation de l'autre montant de l'armature d'assise,
Figure 7 est une vue en coupe transversale de l'armature de dossier dans la zone d'articulation avec l'armature d'assise,
Figure 8 est une vue en coupe suivant VIII-VIII de figure 7.

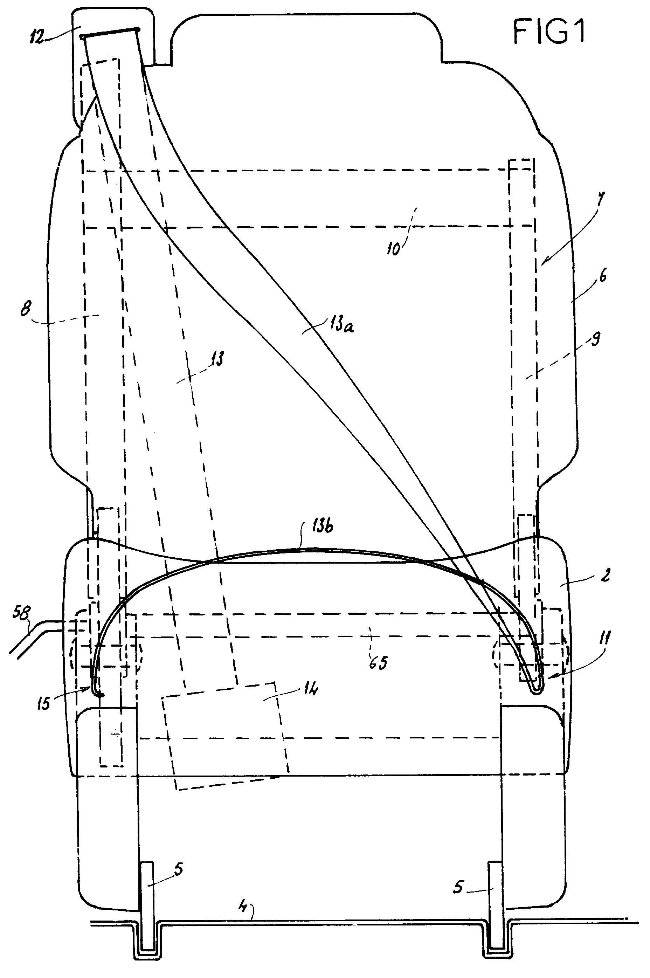

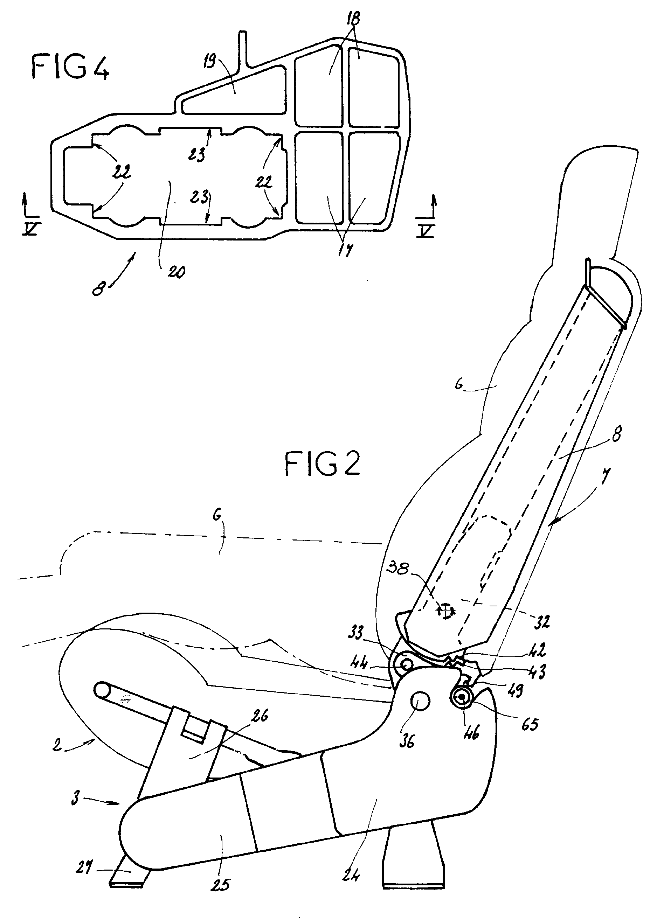

Le siège, représenté aux figures 1 et 2, est de façon connue composé d'une assise 2 portée par une armature d'assise 3, liée au plancher 4 par un piètement 5, et par un dossier 6, porté par une armature de dossier désignée, de façon générale, par 7 et composée de deux montants 8 et 9 reliés par au moins une traverse 10. L'un des montants, et par exemple celui 8 à la figure 1, porte, en partie supérieure, un passant 12 qui est traversé par la sangle 13 d'une ceinture de sécurité dont l'enrouleur 14 est fixé sur l'armature d'assise à l'arrière du dossier. La branche thoracique 13a de la sangle va du passant 12 à la boucle d'un pêne, non représenté, se fixant en 11 sur l'armature d'assise 3, tandis que la sangle abdominale 13b s'étend du pêne précité jusqu'à une boucle d'accrochage, non représentée, se fixant en 15 de l'autre côté de l'armature d'assise 3.

Dans la forme d'exécution représentée, le montant 8 portant le passant 12 pour la sangle 13 est constitué par un profilé en alliage d'aluminium, tandis que le montant 9 est constitué par un tube traditionnel de section rectangulaire et un alliage ferreux.

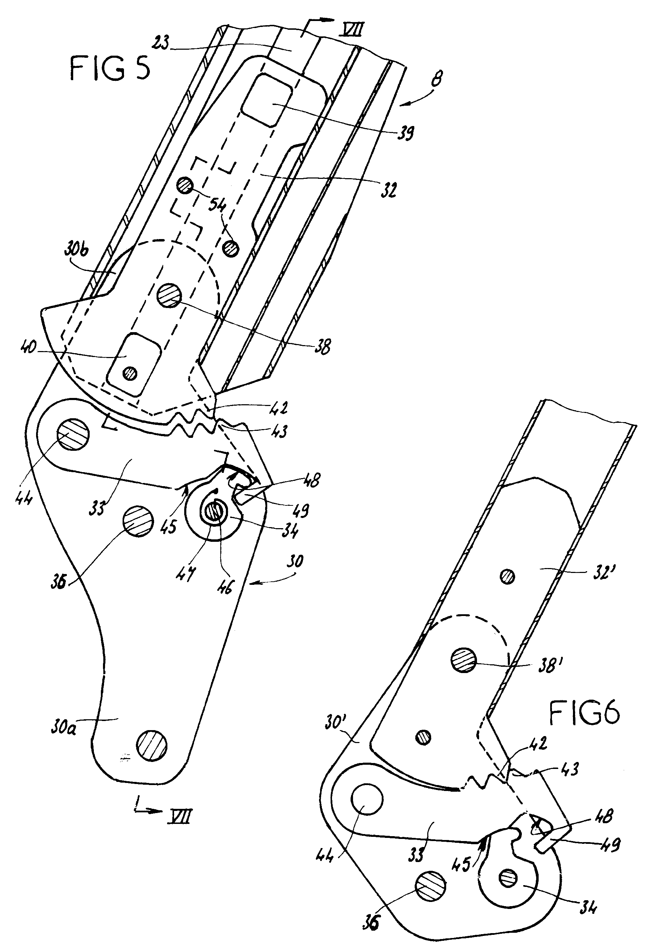

Comme le montre plus en détails la figure 4, le profilé 8 est composé d'un corps principal tubulaire 16 qui est renforcé, au moins localement, par des caissons latéraux postérieurs comprenant deux caissons postérieurs 17, deux caissons 18, juxtaposés aux caissons 17 mais débordant latéralement du profilé, et un caisson latéral 19, raccordant les caissons débordants 18 au flanc latéral correspondant du corps tubulaire 16. Ce corps tubulaire présente extérieurement une forme générale rectangulaire avec une extrémité trapézoïdale. Son profil interne est délimité par un logement central rectangulaire 20, bordé latéralement par deux rainures 22. De la partie centrale de chacune de ces rainures débouche une rainure centrale 23 s'étendant comme elle, longitudinalement sur toute la longueur du profilé.

L'armature d'assise 2 est composée, de chaque côté, d'une platine principale 24 et d'une platine secondaire 25, disposées verticalement et destinées à supporter l'essentiel des efforts transmis à l'armature. Ces platines servent à la fixation des supports d'assise 26 (figure 2) et des éléments de piètement 27. Elles sont fixées sur un carter latéral 28, réalisé en alliage d'aluminium, et /ou de magnésium. Ce carter est disposé sur le côté externe du siège pour assurer l'habillage de son mécanisme.

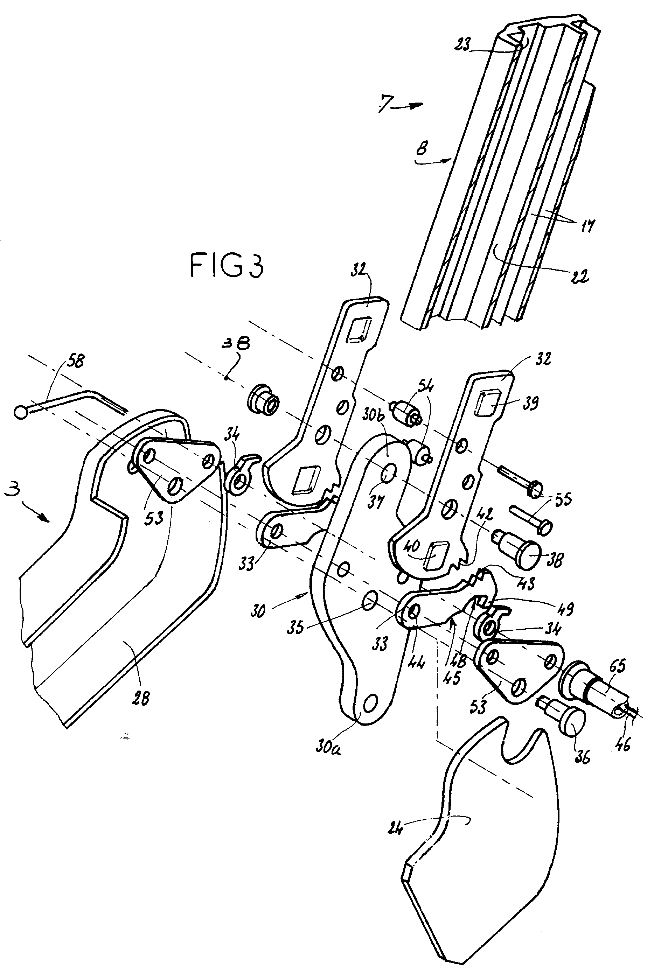

Comme montré plus en détails aux figures 3, 5 et 7, la double articulation du montant 8 de l'armature de dossier par rapport à l'armature d'assise, s'effectue par l'intermédiaire d'un levier 30, de deux platines 32 et d'un dispositif de calage composé d'un verrou 33 et d'un doigt rotatif de surverrouillage 34.

Le levier 30, qui est réalisé en alliage ferreux, et par exemple en acier, comporte un alésage central 35 par lequel il est articulé sur un pivot 36 constituant le premier axe d'articulation. Ce pivot traverse le carter 28 et la platine 24. Le calage en translation de ce pivot est assuré par rivetage de l'extrémité de sa tige contre la platine 24.

Vers le bas de l'axe, le levier est doté d'un prolongement 30a pouvant être attelé à un moyen de commande du basculement du dossier, et par exemple, à la tige d'un ressort à gaz. A son extrémité supérieure, il est prolongé par un tenon 30b qui s'emmanche dans l'extrémité inférieure du logement central du montant profilé 8.

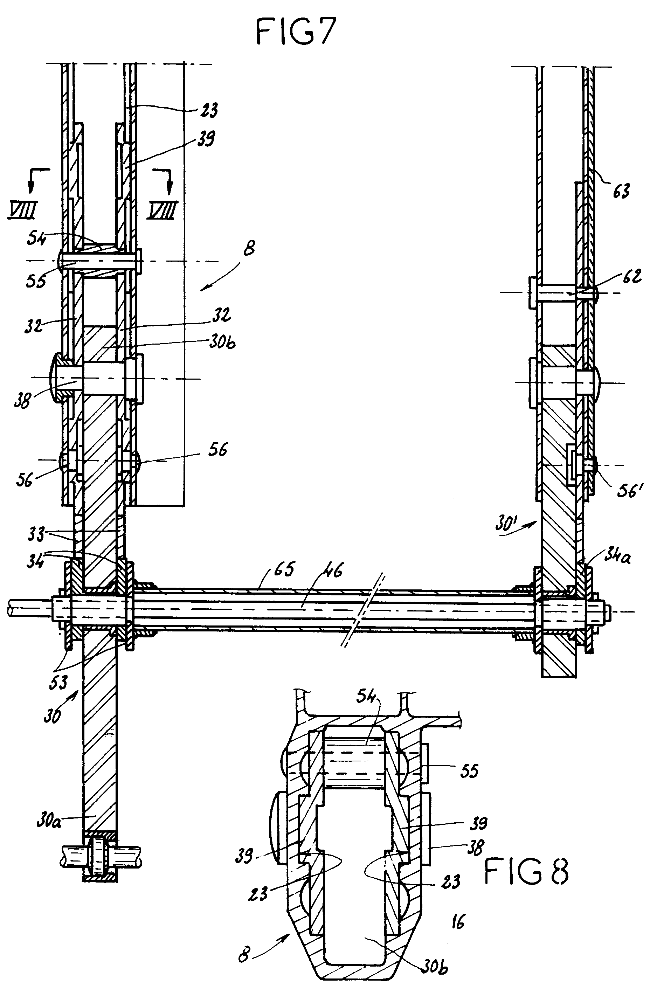

La figure 8 montre que ce tenon 30b occupe la totalité de la section transversale de ce logement.

A proximité de son extrémité supérieure, le tenon 30b est traversé par un alésage 37 pour un axe 38 servant à l'articulation des deux platines 32 et constituant le deuxième axe d'articulation du dossier. Les deux platines 32, réalisées en alliage ferreux, sont disposées de part et d'autre du levier 30, de manière à pouvoir s'encastrer, par leur partie supérieure et sur la plus grande partie de leur longueur, dans les rainures latérales 22 du profilé 8. Chaque platine est munie à proximité de ses extrémités de semi découpes, respectivement 39, 40, saillant à l'opposé du levier et comportant des bords longitudinaux parallèles. Ces semi découpes s'engagent dans les rainures centrales 23 du profilé.

A leurs parties inférieures, dépassant de l'extrémité du montant 8, les platines 32 sont munies localement, et sur leurs parties arrière, de dentures 42 destinées à coopérer avec le dispositif de calage.

On précisera que ces platines sont réalisées par découpage de précision et que les dentures sont traitées thermiquement. Il en est de même pour les verrous 33 et les dentures 43 ménagées à leur extrémité libre opposée à celles articulées en 44 sur le levier 30. A l'opposé de sa denture 43, chaque verrou comporte un profil en rampe 45, (figure 5) destiné à coopérer avec le doigt rotatif de verrouillage 34 correspondant. Chacun des doigts est calé sur une tige de commande transversale 46 et est relié à des moyens de rappel, tels que ressort spirale 47 ou ressort de traction le ramenant dans la position représentée à la figure 6, qui est la position de calage, ou de surverrouillage, de la denture du verrou 34 dans la denture 42 de chaque platine.

Le profil en rampe 45 est suivi par un dégagement 48 avec un crochet 49 permettant, lorsque l'arbre 46 est pivoté dans le sens de la flèche 51, de faire pivoter le verrou 34 dans le sens de la flèche 52 pour désengager les dentures 43 de celles 42 et permettre ainsi à l'ensemble du dossier, par pivotement autour de l'axe 38, de venir contre l'assise 2, comme montré en traits mixtes à la figure 2.

La figure 3 montre que chaque verrou 33 et doigt de surverrouillage 34 sont emprisonnés entre la face latérale correspondante du levier 30 et un gousset de renfort 53, de manière à éviter, en cas d'effort violent et instantané, le désengagement par le côté des dentures.

La figure 8 montre que les platines 32 sont dotées d'entretoises 54 favorisant leur montage à l'intérieur du profilé, avant engagement du tenon 30b du levier 30. Lorsque le tenon est mis en place, ces entretoises tubulaires sont traversées par des rivets 55 qui traversent les deux parois du profilé 8 et assurent une liaison positive des divers éléments, tout en améliorant la rigidité de la liaison. La figure 7 montre, par ailleurs, que les parties des platines jouxtant le levier 30 sont chacune fixées à la paroi correspondante du montant 8 par des rivets 56.

Grâce à la disposition des platines, de part et d'autre du levier au plus prés de la fibre neutre du montant profilé, et au recours à des dentures latérales s'ajustant parfaitement et traitées pour présenter une bonne dureté, la transmission des efforts du montant aux platines s'effectuent dans d'excellentes conditions, sans que les platines puissent endommager le montant. Cela permet d'utiliser un montant en alliage d'aluminium et/ou de magnésium, c'est-à-dire en un matériau présentant une dureté plus faible que les alliages ferreux, mais une plus faible masse spécifique.

La figure 7 montre également que les doigts de surverrouillage 34 sont calés en rotation sur l'extrémité correspondante de l'arbre 46 et que cet arbre, monté libre en rotation dans le levier 30, est prolongé d'un côté par un organe de manoeuvre 58 et s'étend de l'autre côté jusqu'au doigt de surverrouillage 34a de la liaison articulée du montant 9 avec l'armature d'assise 3.

Cette liaison articulée est similaire à celle du montant 8, mais s'en différencie par le fait que le levier 30' ne comporte pas de prolongement inférieur 30b et qu'il est associé à une seule platine 32' s'interposant entre la face externe du levier et la face interne de la paroi du levier qui est tournée vers l'extérieur du siège. La liaison des différents éléments est assurée par des rivets 60 et 62 qui, sur l'extérieur, ne sont pas rabattus directement sur la paroi du montant 9, mais contre un renfort métallique 63 plaqué contre cette paroi. La platine 32' comporte, dans sa partie dépassant du montant, des dentures 42 qui coopèrent avec des dentures 43 d'un verrou 34 identique au verrou de l'autre montant.

A la figure 6, le dispositif de calage de l'armature de dossier par rapport à l'armature d'assise, est en position de verrouillage avec surverrouillage, tandis qu'à la figure 5, il est en position déverrouillée.

Lorsque ce dispositif est dans une position, celle-ci s'applique sur les deux montants 8 et 9, de sorte que lorsqu'il est en position de verrouillage, le pivotement du levier 30 autour du premier axe d'articulation 36, pivotement se transmettant au levier 30' par l'arbre 46 mais aussi par l'entretoise 65 entourant cet axe, provoque le basculement simultané des deux montants, et, en conséquence, celui de l'armature de dossier entre l'une ou l'autre des positions de confort.

De par sa structure, ce mécanisme peut être fourni sous forme de deux ensembles pré-assemblés, à savoir les deux platines avec les entretoises 54, et le levier 30 avec le mécanisme de calage, ce qui simplifie le montage, en réduit le temps et le coût de celui-ci.

## Revendications

1. Dispositif de liaison articulée entre dossier et assise d'un siège de véhicule dans lequel l'armature de dossier (7) est composée de deux montants (8, 9), articulés par rapport à l'armature d'assise (3) autour d'un premier axe horizontal transversal (36) pour définir diverses positions de confort et autour d'un deuxième axe (38), parallèle au premier, pour permettre le rabattement du dossier (6) sur l'assise (2), cette dernière articulation étant associée à des moyens de calage déverrouillable, **caractérisé en ce que**, pour chaque montant (8, 9), la première articulation par rapport à l'armature d'assise (3) est assurée par un levier (30) comportant, au-dessus de sa partie tourillonnant sur le premier axe d'articulation (36), un tenon (30b) de section rectangulaire s'emmanchant dans un logement central (20) ménagé dans le profilé constituant le montant (8, 9) correspondant, tandis que dans la deuxième articulation, l'axe (38) est porté par le tenon (30b) précité et coopère avec au moins une platine (32, 32') qui, disposée contre le levier (30), s'encastre avec serrage dans le logement du profilé, auquel elle est fixée par rivetage, cette platine présentant une extrémité inférieure dépassant du montant et munie localement d'une denture (42), apte à coopérer avec une denture complémentaire (43) portée par un mécanisme de calage (33, 34) du montant par rapport au levier (30).

2. Dispositif selon la revendication 1, **caractérisé en ce que** le montant (8) est constitué par un profilé extrudé en alliage d'aluminium et l'articulation de ce montant par rapport au levier (30), réalisé en alliage ferreux, est assurée par deux platines (32) en alliage ferreux disposées de part et d'autre de ce levier et s'encastrant dans des rainures longitudinales (22) ménagées à l'intérieur du profilé, latéralement par rapport au logement (20) pour le tenon (30b) du levier (30).

3. Dispositif selon la revendication 2, **caractérisé en ce que** chacune des platines (32) comporte, à proximité de ses extrémités, des semi découpes (39, 40) formant des bossages qui, en saillie à l'opposé du levier et présentant des bords longitudinaux parallèles, se logent dans des rainures longitudinales (23) ménagées dans le profilé et à proximité de sa fibre neutre.

4. Dispositif selon l'une quelconque des revendications 1 à 3, **caractérisé en ce que** la denture (43) du mécanisme de calage coopérant avec la denture (42) d'une platine (39) est réalisée sur la partie supérieure de l'extrémité d'un verrou (34), articulé par son autre extrémité sur le levier (30), et la partie inférieure de l'extrémité dentée du verrou (34) comporte une rampe (45) apte à coopérer avec un doigt rotatif (34) de surverrouillage.

5. Dispositif selon la revendication 4, **caractérisé en ce que** les doigts rotatifs de surverrouillage (34) du mécanisme de calage des deux montants (8, 9) sont calés en rotation sur un arbre transversal commun (46) qui, monté libre en rotation dans les leviers (30) formant la première articulation, est prolongé, d'un côté du siège, par un moyen de commande (58).

6. Dispositif selon la revendication 5, **caractérisé en ce que** les dentures (42, 43) des platines (32, 32') et des verrous (33) sont réalisées par découpage de précision et traitées thermiquement.

7. Dispositif selon la revendication 6, **caractérisé en ce que** des douilles d'écartement (54), insérées entre les deux platines (32), avant leur montage dans le profilé (8), constituent entretoises de rigidification après mise en place de rivets (55) les traversant et traversant les platines (32) et les parois du profilé (8).

## Claims

1. Device for hinged connection between backrest and seat part of a vehicle seat in which the backrest frame (7) is composed of two uprights (8, 9) hinged relative to the seat-part frame (3) about a first transverse horizontal pin (36) for defining various comfort positions and about a second pin (38), parallel to the first, for enabling the backrest (6) to be folded down onto the seat part (2), this latter hinging being associated with unlockable locking means, **characterized in that**, for each upright (8, 9), the first hinging relative to the seat-part frame (3) is effected by a lever (30) having, above its part rotating on the first hinge pin (36), a rectangular-section tenon (30b) which fits into a central housing (20) formed in the section constituting the corresponding upright (8, 9), whereas in the second hinging, the pin (38) is carried by the above-mentioned tenon (30b) and cooperates with at least one plate (32, 32') which, arranged against the lever (30), is clampingly embedded in the housing of the section, to which it is fixed by riveting, this plate having a lower end extending beyond the upright and locally equipped with teeth (42) capable of cooperating with complementary teeth (43) carried by a mechanism (33, 34) for locking the upright relative to the lever (30).

2. Device according to Claim 1, **characterized in that** the upright (8) consists of an aluminium alloy extruded section and the hinging of this upright relative to the lever (30), made of ferrous alloy, is effected by two ferrous alloy plates (32) arranged on either side of this lever and embedded in longitudinal grooves (22) formed inside the section, laterally relative to the housing (20) for the tenon (30b) of the lever (30).

3. Device according to Claim 2, **characterized in that** each of the plates (32) has, close to its ends, semi-cutouts (39, 40) forming bosses which, projecting away from the lever and having parallel longitudinal borders, are lodged in longitudinal grooves (23) formed in the section and close to its neutral axis.

4. Device according to any one of Claims 1 to 3, **characterized in that** the teeth (43) of the locking mechanism cooperating with the teeth (42) of a plate (39 [sic]) are formed on the upper part of the end of a latch (34 [sic]), hinged by its other end on the lever (30), and the lower part of the toothed end of the latch (34 [sic]) has a ramp (45) capable of cooperating with a rotary clamping finger (34).

5. Device according to Claim 4, **characterized in that** the rotary clamping fingers (34) of the mechanism for locking the two uprights (8, 9) are locked in terms of rotation on a common transverse shaft (46) which, mounted free in terms of rotation in the levers (30) forming the first hinging, is extended, on the side of the seat, by a control means (58).

6. Device according to Claim 5, **characterized in that** the teeth (42, 43) of the plates (32, 32') and of the latches (33) are produced by precision blanking and are heat-treated.

7. Device according to Claim 6, **characterized in that** spacer bushes (54), inserted between the two plates (32), before their mounting in the section (8), constitute braces for stiffening after rivets (55) passing through them and passing through the plates (32) and the walls of the section (8) have been put in place.

## Patentansprüche

1. Einrichtung zur Gelenkverbindung von Sitzbereich und Rückenlehne eines Fahrzeugsitzes, bei dem das Rückenlehnenskelett (7) zwei Hochstreben (8, 9) umfaßt, welche zur Festlegung verschiedener Komfortstellungen um eine horizontale erste Querachse (36) gegenüber dem Sitzbereichsskelett (3) gelenkig sind und um eine zur ersten parallele zweite Achse (38) gelenkig sind, um die Rückenlehne (6) auf den Sitzbereich (2) umlegen zu können, wobei diesem letzteren Gelenk entriegelbare Feststellmittel zugeordnet sind,
**dadurch gekennzeichnet, daß** für jede Hochstrebe (8, 9) die erste Gelenkigkeit gegenüber dem Sitzbereichsskelett (3) durch einen Hebel (30) gewährleistet ist, welcher oberhalb seines die erste Gelenkachse (36) drehbar lagernden Bereichs eine Nase (30b) mit Rechteckquerschnitt aufweist, die in eine zentrale Aufnahme (20) eingesteckt ist, welche in dem die entsprechende Hochstrebe (8, 9) bildenden Profil ausgebildet ist, während für das zweite Gelenk die Achse (38) an der genannten Nase (30b) gehalten ist und mit mindestens einer Platte (32, 32') zusammenwirkt, welche unter Anlage am Hebel (30) in der Aufnahme des Profils festgeklemmt ist und an diesem durch Vernietung befestigt ist, wobei diese Platte ein aus der Hochstrebe herausreichendes unteres Ende aufweist, welches örtlich mit einer Verzahnung (42) ausgeführt ist, die zur Zusammenwirkung mit einer komplementären Verzahnung (43) ausgelegt ist, welche von einem Mechanismus (33, 34) zur Feststellung der Hochstrebe gegenüber dem Hebel (30) getragen ist.

2. Einrichtung nach Anspruch 1, dadurch gekennzeichnet, daß die Hochstrebe (8) von einem Extrusionsprofil aus einer Aluminiumlegierung gebildet ist und die Gelenkigkeit dieser Hochstrebe gegenüber dem aus einer Eisenlegierung hergestellten Hebel (30) durch zwei Platten (32) aus einer Eisenlegierung gewährleistet ist, welche beidseits des Hebels angeordnet sind und in Längsnuten (22) eingreifen, die in dem Profil seitlich bezogen auf die Aufnahme (20) für die Nase (30b) des Hebels (30) ausgebildet sind.

3. Einrichtung nach Anspruch 2, dadurch gekennzeichnet, daß jede der Platten (32) nahe ihrer Enden Halbausdrückungen (39, 40) aufweist, welche Vorsprünge bilden, die vom Hebel weg abstehen, parallele Längsränder aufweisen und in Längsnuten (23) aufgenommen sind, welche in dem Profil nahe dessen neutraler Faser ausgebildet sind.

4. Einrichtung nach einem der Ansprüche 1 bis 3, dadurch gekennzeichnet, daß die mit der Verzahnung (42) einer Platte (39) zusammenwirkende Verzahnung (43) des Feststellmechanismus im oberen Bereich des Endes eines Riegels (34) hergestellt ist, welcher mit seinem anderen Ende an dem Hebel (30) angelenkt ist, und der untere Bereich des verzahnten Endes des Reges (34) eine Schrägfläche (45) aufweist, welche zur Zusammenwirkung mit einem drehbaren Verriegelungszapfen (34) ausgelegt ist.

5. Einrichtung nach Anspruch 4, dadurch gekennzeichnet, daß die drehbaren Verriegelungszapfen (34) des Feststellmechanismus der beiden Hochstreben (8, 9) drehfest auf einer gemeinsamen Querwelle (46) angeordnet sind, welche drehbar an den das erste Gelenk bildenden Hebeln (30) angebracht ist und auf einer Seite des Sitzes durch ein Betätigungsmittel (58) fortgesetzt ist.

6. Einrichtung nach Anspruch 5, dadurch gekennzeichnet, daß die Verzahnungen (42, 43) der Platten (32, 32') und der Riegel (33) durch Feinschneiden hergestellt und thermisch behandelt sind.

7. Einrichtung nach Anspruch 6, dadurch gekennzeichnet, daß Abstandshülsen (54), welche zwischen die beiden Platten (32) vor deren Einbau in das Profil (8) eingesetzt sind, nach Anbringung von sie durchsetzenden sowie die Platten (32) und die Wände des Profils (8) durchsetzenden Nieten (55) Versteifungsstege bilden.
